# EUROPEAN PATENT SPECIFICATION

(11) **EP 3 115 095 B1**
(45) Date of publication and mention of the grant of the patent: **21.09.2022**
(21) Application number: 15758602.5
(22) Date of filing: 02.03.2015
(51) Int. Cl.: B01D 46/00, B01D 39/20, F01N 3/022, B01D 46/24, B28B 11/00

(54) **HONEYCOMB FILTER, AND METHOD FOR MANUFACTURING HONEYCOMB FILTER**
WABENFILTER UND VERFAHREN ZUR HERSTELLUNG EINES WABENFILTERS
FILTRE EN NID-D'ABEILLES ET PROCÉDÉ POUR LA FABRICATION DE FILTRE EN NID-D'ABEILLES

(30) Priority: 03.03.2014 JP 2014040783
(43) Date of publication of application: 11.01.2017
(73) Proprietor: IBIDEN Co., Ltd., Gifu 503-8604 (JP)
(72) Inventor: YAMANISHI Osamu, Niihama-shi Ehime 792-8521 (JP); SONODA Masato, Niihama-shi Ehime 792-8521 (JP)
(74) Representative: Vossius & Partner Patentanwälte Rechtsanwälte mbB
(86) International application number: PCT/JP2015/056100
(87) International publication number: WO 2015/133438

(56) References cited:
- EP-A1- 1 470 852
- WO-A1-03/014538
- WO-A1-2015/022937
- CN-A- 101 018 932
- JP-A- S61 167 798
- JP-A- 2004 084 666
- JP-B2- 4 712 805
- JP-B2- 5 677 648
- US-A- 4 521 532
- US-A1- 2006 191 248

## Description

### Technical Field

The present invention relates to a honeycomb filter, and a method for manufacturing a honeycomb filter.

### Background Art

Conventionally, there is known a porous ceramic honeycomb filter which is known as a diesel particulate filter or the like. In the honeycomb filter, many flow passages any one of one end or the other end of each of which is closed are formed by partition walls. Such a honeycomb filter is manufactured by preparing a compact having many through holes from a material containing ceramic powder or a ceramic raw material, closing specific through holes on each end face of the compact, and after that, firing the closed compact.

Japanese Unexamined Patent Publication Nos. 2005-118747 and 2009-532197 relate to background art.

WO 03/014538 A1 discloses a particulate filter for collecting particulates in the exhaust gas including partitioning walls for forming passages. The partitioning walls are made of a porous material. The end portions of adjacent partitioning walls are brought close each other so as to narrow the respective passage formed by the partitioning walls, and the cross-sectional area of the flow path at the end region of the passage is made to be smaller than the cross-sectional area of the flow path in the remaining regions of the passage. The particulate filter has an extended portion which extends beyond the top ends of the partitioning walls from the end surface of the particulate filter.

CN 101 018 932 A concerns a block for filtering particles contained in an internal combustion engine exhaust gases, comprising overlapping assemblies of adjacent input channels and output channels. The input and output channels are alternately arranged so as to form, in cross-section, a chequered pattern The overall volume of the input channels is greater than that of the output channels. At least one inner space of one channel comprises at least one inner fin.

EP 1 470 852 A1 relates to a honeycomb structure having at least two end surfaces comprising first and second surfaces, a porous body in which fluid channels extending to the second end surface from the first end surface are formed, and plugging members for plugging portions having predetermined lengths from the end surfaces of the fluid channel. The fluid channels comprise first fluid channels whose end portions on the side of the second end surface are plugged by the plugging members and which are opened in the first end surface without being plugged by the plugging members, and second fluid channels whose end portions on the side of the first end surface are plugged by the plugging members and which are opened in the second end surface without being plugged by the plugging members. The first fluid channels are formed in a shape in which an opening area S1 in the first end surface is larger than a sectional area S2 vertical to a central axis in a position in a predetermined depth from the first end surface and in which a sectional area S3 vertical to the central axis is in a middle between the first end surface and the position in the predetermined depth gradually decreases to the area S2 from the area S1.

### Summary of Invention

### Technical Problem

Now, as a method of closing the specific through holes, there can be considered a closing method of deforming the partition walls in such a way that the cross-section areas of through holes that are not to be closed are enlarged, and crimping the partition walls together on the side of through holes that are to be closed.

However, in this method, there is sometimes a case where cracks occur in the partition walls separating flow passages when deforming as above, and the cracks remain even after crimping the partition walls together.

The present invention is devised in view of the aforementioned problem and an object thereof is to provide a honeycomb filter in which cracks hardly occur, and a method for manufacturing the same.

### Solution to Problem

The invention is defined in the independent claims. Some embodiments are recited in the dependent claims

A honeycomb filter according to the present invention includes a columnar body having a plurality of first flow passages and a plurality of second flow passages extending in an axial direction and having partition walls separating the adjacent flow passages.

A cross-section area of each first flow passage on one end face of the columnar body is larger than a cross-section area of each first flow passage in a central part in the axial direction, and each second flow passage is closed on the one end face by crimping the partition walls together.

Each corner part that forms the first flow passages and is formed between an adjacent pair of the partition walls has a first protrusion part that protrudes toward an interior of the first flow passage and extends in the axial direction, in a central part of the first flow passages in the axial direction.

Moreover, each cross-section area of each second flow passage on the other end face of the columnar body is larger than a cross-section area of each second flow passage in the central part in the axial direction, and each first flow passage is closed on the other end face.

The honeycomb filter of the present invention can be obtained by molding a honeycomb compact having first protrusion parts each of which is between a pair of partition walls, deforming the partition walls in such a way that the cross-section areas of the first flow passages of the compact are enlarged on one end side to crimp the partition walls together on the side of the second flow passages and to close the second flow passages, and after that, performing firing. Cracks are suppressed from occurring when deforming the partition walls by the first protrusion parts. Accordingly, a honeycomb filter with less cracks can be obtained.

Herein, one of the pair of partition walls forming the corner part can separate the first flow passage and the second flow passage from each other. The partition wall that separates the first flow passage and the second flow passage from each other means a partition wall that separates an outlet-side flow passage and an inlet-side flow passage from each other, and since this partition wall is deformed when closing, stress tends to be exerted on that corner part. Accordingly, the effect of the present invention is high.

A corner part that forms the second flow passage and is flow passage or the second flow passage and extends in the axial direction in a central part of the partition wall.

In this case, cracks in the central parts of the partition walls being deformed can be suppressed.

A method for manufacturing a honeycomb filter according to the present invention, includes: a step of preparing a honeycomb compact including a columnar body having a plurality of first flow passages and a plurality of second flow passages extending in an axial direction and having partition walls separating the adjacent flow passages, each corner part that forms the first flow passages and is formed between an adjacent pair of the partition walls having a first protrusion part that protrudes toward an interior of the first flow passage, in a central part of the first flow passages in the axial direction; a step of inserting a jig into each first flow passage of the honeycomb compact to enlarge a cross-section area and crimping the partition walls together on each second flow passage side to close each second flow passage; and a step of inserting a jig into each second flow passage of the honeycomb compact to enlarge a cross-section area and crimping the partition walls together on each first flow passage side to close each first flow passage.

### Advantageous Effects of Invention

According to the present invention, a honeycomb filter in which cracks hardly occur, and a method for manufacturing the same are provided.

### Brief Description of Drawings

[Figure 1] Figure 1 is a perspective view of a honeycomb filter according to a first embodiment.
[Figure 2] Figure 2 is a cross-sectional view of an axial-directional center part of the honeycomb filter taken along the II-II line in Figure 1.
[Figure 3] Figure 3 is an expanded view of Figure 2.
[Figure 4] Portion (a) of Figure 4 is an expanded view of an inlet-side end face 10Eᵢₙ in Figure 1, and portion (b) of Figure 4 is a cross-sectional view taken along the b-b line in portion (a) of Figure 4.
[Figure 5] Portion (a) of Figure 5 is an expanded view of an outlet-side end face 10Eₒᵤₜ in Figure 1, and portion (b) of Figure 5 is a cross-sectional view taken along the b-b line in portion (a) of Figure 5.
[Figure 6] Figure 6 is a schematic diagram showing a method for manufacturing a honeycomb filter according to the first embodiment.
[Figure 7] Figure 7 is a cross-sectional view of an axial-directional center part of a compact showing a situation where inlet-side flow passages 70Hᵢₙ of the compact are enlarged to close outlet-side flow passages 70Hₒᵤₜ.
[Figure 8] Figure 8 is a cross-sectional view of an axial-directional center part of a honeycomb filter according to a second embodiment.
[Figure 9] Figure 9 is an expanded view of the inlet-side end face 10Eᵢₙ of the honeycomb filter according to the second embodiment.
[Figure 10] Figure 10 is an expanded view of the outlet-side end face 10Eₒᵤₜ in Figure 1.
[Figure 11] Figure 11 is a cross-sectional view of an axial-directional center part of a honeycomb filter according to a third embodiment.
[Figure 12] Figure 12 is an expanded cross-sectional view of an axial-directional center part of a honeycomb filter according to a fourth embodiment.

### Description of Embodiments

A first embodiment of the present invention is described with reference to the drawings.

### (First Embodiment)

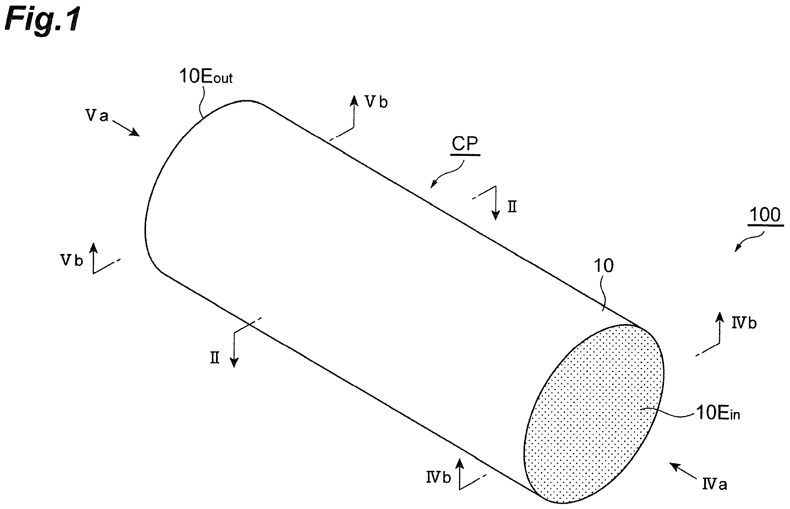

A honeycomb filter 100 according to the embodiment includes a cylindrical body 10 as shown in Figure 1. The cylindrical body 10 has an inlet-side end face 10Eᵢₙ and an outlet-side end face 10Eₒᵤₜ.

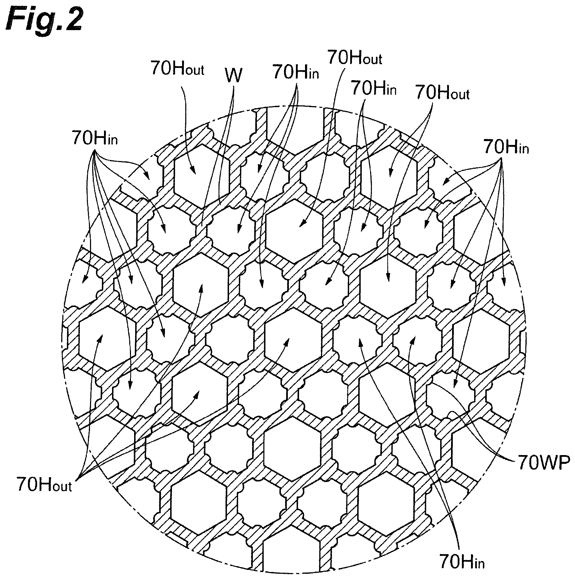

Figure 2 is a cross-section of a central part CP of the cylindrical body 10 in the axial direction. The cylindrical body 10 has many inlet-side flow passages 70Hᵢₙ and many outlet-side flow passages 70Hₒᵤₜ. In the embodiment, the inlet-side flow passages 70Hᵢₙ and the outlet-side flow passages 70Hₒᵤₜ are regularly arranged in such a way that one inlet-side flow passage 70Hᵢₙ is adjacent to three other inlet-side flow passages 70Hᵢₙ and is adjacent to three outlet-side flow passages 70Hₒᵤₜ. One outlet-side flow passage 70Hₒᵤₜ is adjacent to six inlet-side flow passages 70Hᵢₙ and is not adjacent to the other outlet-side flow passages 70Hₒᵤₜ. Each flow passage is adjacent to totally six flow passages respectively via partition walls.

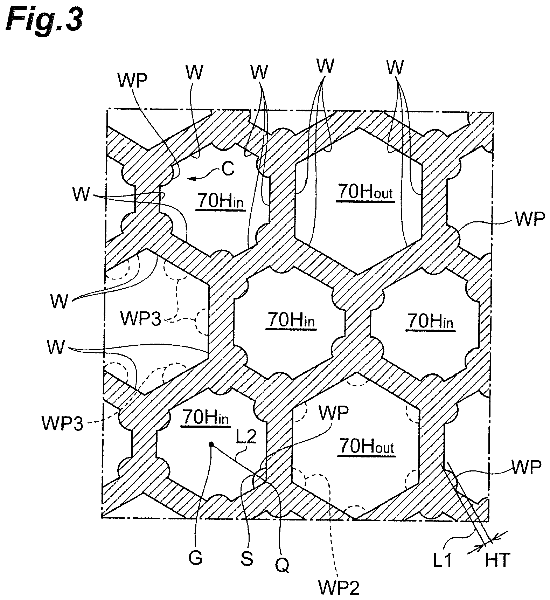

Figure 3 is an expanded view of Figure 2. Between the adjacent flow passages, the respective partition walls W which separate these are provided, and an aggregate of the partition walls W constitutes the cylindrical body 10.

The outlet-side flow passage 70Hₒᵤₜ is formed of six partition walls W, and its cross-section shape is substantially hexagonal. The inlet-side flow passage 70Hᵢₙ is formed of six partition walls W. In the inlet-side flow passage 70Hᵢₙ, in each corner part C made between an adjacent pair of partition walls W, a protrusion part (first protrusion part) WP protruding toward the interior of the inlet-side flow passage 70Hᵢₙ is formed. Accordingly, the cross-section shape of the inlet-side flow passage 70Hᵢₙ has a shape in which the vertices of the hexagon are caused to protrude toward the inside. Each protrusion part WP extends in the axial direction of the cylindrical body 10 (flow passages).

The height of the protrusion part WP is not specially limited but, for example, a protrusion height HT from line L1 connecting both ends of the bottom part of the protrusion part WP can be 0.04 to 0.20 mm. Moreover, when point Q formed by connecting portions of the pair of partition walls W other than the protrusion part, the centroid G of the inlet-side flow passage 70Hᵢₙ, and intersection S of line L2 connecting the point Q and the centroid G and the outermost part of the protrusion part WP are defined, the distance between the point Q and the intersection S can be set to be 0.1 to 0.3 mm.

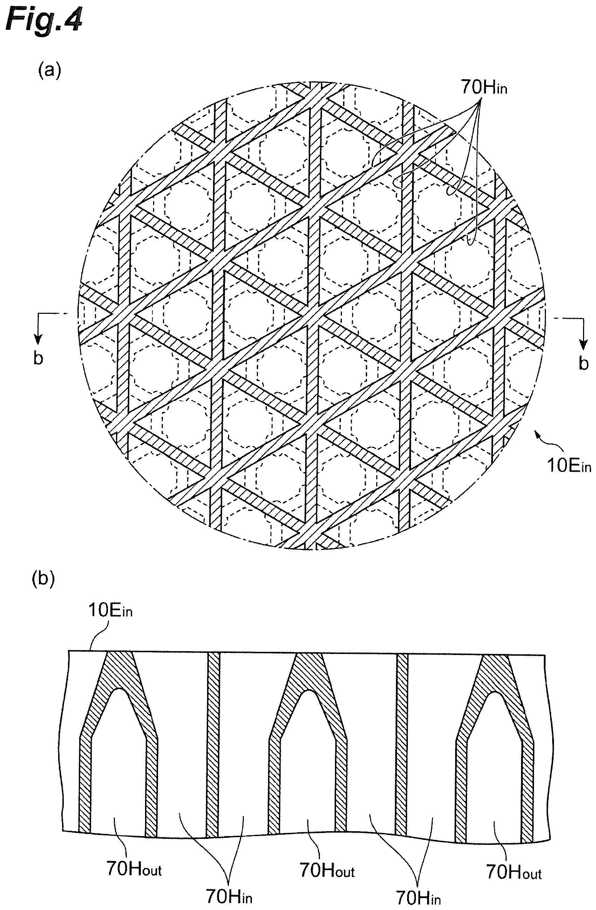

Next, referring to portions (a) and (b) of Figure 4, an inlet-side structure is presented. On the inlet-side (one end-side) end face 10Eᵢₙ, the cross-section area of the inlet-side flow passage 70Hᵢₙ is made larger than that in the central part in the axial direction. On the other hand, the cross-section area of the outlet-side (the other end-side) flow passage 70Hₒᵤₜ becomes 0 and is closed. Specifically, the cross-section shape of each inlet-side flow passage 70Hᵢₙ which is substantially hexagonal in the axial-directional center part as in Figure 2 is enlarged so as to become triangular, the vertices of each triangle reach the centers of the outlet-side flow passages 70Hₒᵤₜ, and in this way, the outlet-side flow passage 70Hₒᵤₜ is closed. In other words, the inlet-side flow passage 70Hᵢₙ has, on the inlet-side end face 10Eᵢₙ, a tapered part in which the cross-section area becomes larger as going toward the inlet-side end face 10Eᵢₙ.

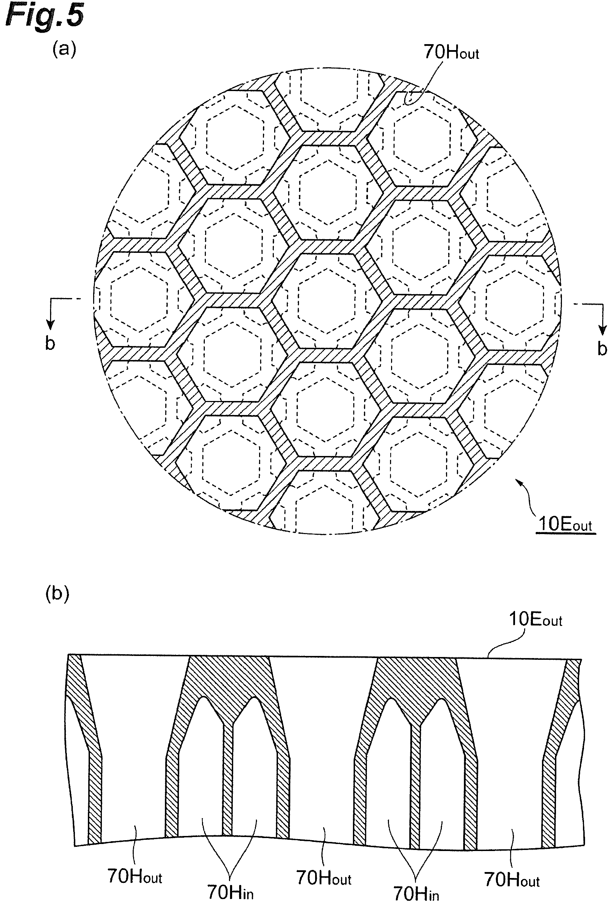

Next, referring to portions (a) and (b) of Figure 5, an outlet-side structure is presented. On the outlet-side end face 10Eₒᵤₜ, the cross-section area of the outlet-side flow passage 70Hₒᵤₜ is made larger than that in the central part in the axial direction. On the other hand, the cross-section area of the inlet-side flow passage 70Hᵢₙ is made 0 and is closed. Specifically, the cross-section shape of each outlet-side flow passage 70Hₒᵤₜ which is substantially hexagonal in the axial-directional center part as in Figure 2 is enlarged to be hexagonal in such a way that the portions of the sides become corners, the vertices of each hexagon reach the centers of the inlet-side flow passages 70Hᵢₙ, and in this way, the inlet-side flow passage 70Hᵢₙ is closed. In other words, the outlet-side flow passage 70Hₒᵤₜ has, on the outlet-side end face 10Eₒᵤₜ, a tapered part in which the cross-section area becomes larger as going toward the outlet-side end face 10Eₒᵤₜ.

The material of the cylindrical body is porous ceramics. Examples of the ceramics include aluminum titanate, silicon carbide and cordierite. The aluminum titanate can contain magnesium, silicon and the like.

Such a honeycomb filter can be manufactured by the following method. First, extrusion molding is performed on a ceramic raw material by an extrusion molding machine to manufacture a honeycomb compact having the cross-section shape as in Figure 2. The honeycomb compact has unclosed inlet-side flow passages 70Hᵢₙ and unclosed outlet-side flow passages 70Hₒᵤₜ in the state where they are penetrated, and has protrusion parts 70WP in the unclosed inlet-side flow passages 70Hᵢₙ.

The composition of the ceramic raw material only has to be one giving porous ceramics after firing. For example, it can contain the ceramic raw material, an organic binder, a pore-forming agent, a solvent and an additive that is added as needed.

The ceramic raw material is powder containing elements constituting the ceramics. The binder can be an organic binder, and examples thereof can include celluloses such as methylcellulose, carboxymethylcellulose, hydroxyalkylmethylcellulose and sodium carboxymethylcellulose, alcohols such as polyvinyl alcohol, and sulfonate salts of lignins. Examples of the additive include lubricants, plasticizers and dispersants.

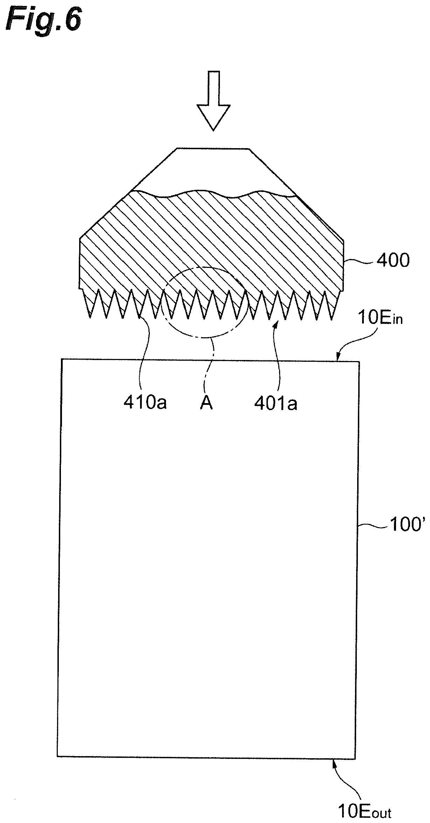

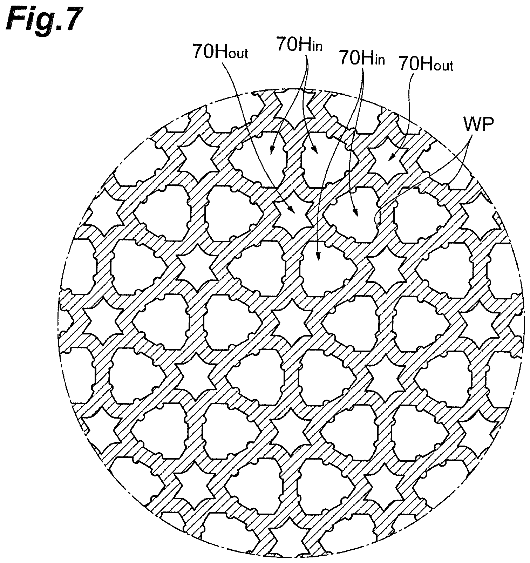

Next, as shown in Figure 6, the outlet-side flow passages 70Hₒᵤₜ are closed on the inlet-side end face 10Eᵢₙ of the obtained unfired honeycomb compact 100'. Specifically, a closing jig 400 having many triangular pyramidal projections 410a is prepared. Then, the closing jig 400 is moved such that the projections 410a enter the inlet-side flow passages 70Hᵢₙ. In this way, as shown in Figure 7, the partition walls of the inlet-side flow passages 70Hᵢₙ are deformed, and the cross-section areas of the flow passages are enlarged, and meanwhile, the cross-section areas of the outlet-side flow passages 70Hₒᵤₜ are reduced. Then, eventually, as shown in portions (a) and (b) of Figure 4, the cross-section shapes of the inlet-side flow passages 70Hᵢₙ become triangular, the partition walls are completely crimped together at the outlet-side flow passages 70Hₒᵤₜ, and the outlet-side flow passages 70Hₒᵤₜ are closed. Namely, the outlet-side flow passages 70Hₒᵤₜ are closed on the inlet-side end face 10Eᵢₙ. Notably, vibration or ultrasonic waves may be given to the closing jig 400.

Next, likewise, the inlet-side flow passages 70Hᵢₙ on the outlet-side end face 10Eₒᵤₜ are closed with another closing jig. The projections, of the closing jig, which are inserted into the outlet-side flow passages 70Hₒᵤₜ can be made hexagonal pyramidal. After that, after dried as needed, the honeycomb compact 100' both end faces of which have been closed is fired, and thereby, the honeycomb filter 100 according to the embodiment is obtained.

According to the embodiment, the protrusion part WP is provided between a pair of partition walls W of the inlet-side flow passage 70Hᵢₙ. Due to this, when closing the outlet-side flow passage 70Hₒᵤₜ by deforming the partition walls so as to enlarge the cross-section area of the inlet-side flow passage 70Hᵢₙ, the partition wall W, in particular, the corner part before deformation hardly suffers cracks. Accordingly, a honeycomb filter with less defects can be manufactured.

### (Second Embodiment)

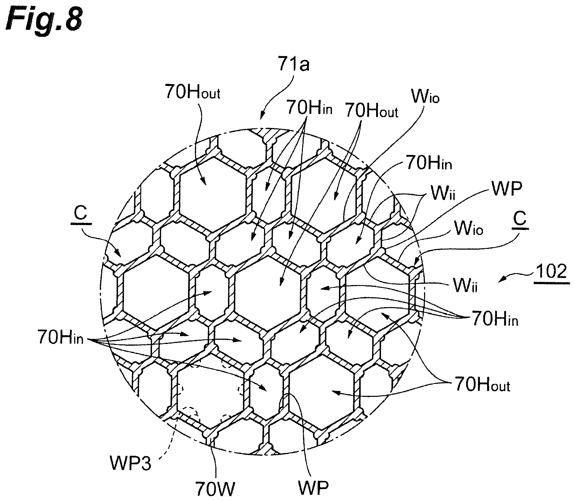

Next, referring to Figure 8 to Figure 10, a honeycomb filter 102 according to a second embodiment is described. Description of the points same as those in the first embodiment is omitted. Figure 8 shows a cross-section in the axial-directional center part of the honeycomb filter 102 according to the embodiment. Different from the honeycomb filter 100 according to the first embodiment, in this embodiment, the inlet-side flow passages 70Hᵢₙ and the outlet-side flow passages 70Hₒᵤₜ are regularly arranged in such a way that one inlet-side flow passage 70Hᵢₙ is adjacent to four other inlet-side flow passages 70Hᵢₙ and is adjacent to two outlet-side flow passages 70Hₒᵤₜ. One outlet-side flow passage 70Hₒᵤₜ is adjacent to six inlet-side flow passages 70Hᵢₙ and is not adjacent to the other outlet-side flow passages 70Hₒᵤₜ. Accordingly, each flow passage is adjacent to totally six flow passages.

In the inlet-side flow passage 70Hᵢₙ, in each corner part made between a pair of partition walls W, the protrusion part WP protruding toward the interior of the inlet-side flow passage 70Hᵢₙ is formed. Herein, in the embodiment, the protrusion part WP is provided in the corner part between a partition wall Wii that separates the inlet-side flow passage 70Hᵢₙ and the inlet-side flow passage 70Hᵢₙ from each other and a partition wall Wio that separates the inlet-side flow passage 70Hᵢₙ and the outlet-side flow passage 70Hₒᵤₜ from each other, and a protrusion part WP is not provided in the corner part between the partition wall Wii and the partition wall Wii. Accordingly, the cross-section shape of the inlet-side flow passage 70Hᵢₙ has a shape in which four vertices other than two opposite vertices are caused to protrude toward the inside.

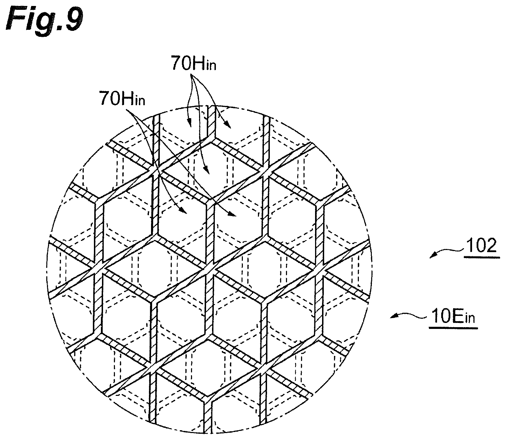

Next, referring to Figure 9, the inlet-side structure is presented. On the inlet-side end face 10Eᵢₙ, the cross-section area of the inlet-side flow passage 70Hᵢₙ is made larger than that in the central part in the axial direction. On the other hand, the cross-section area of the outlet-side flow passage 70Hₒᵤₜ is made 0. Specifically, the substantial hexagon which is the cross-section shape of each inlet-side flow passage 70Hᵢₙ in the axial-directional center part is enlarged so as to become substantially rhombic by two opposite sides thereof being enlarged, the vertices of each rhombus reach the centers of the outlet-side flow passages 70Hₒᵤₜ, and in this way, the outlet-side flow passage 70Hₒᵤₜ is closed.

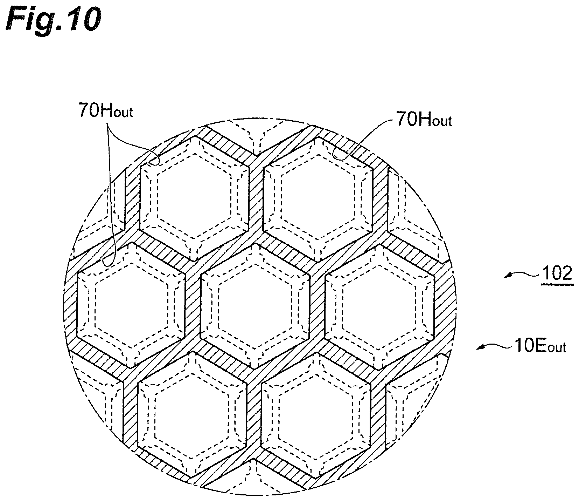

Next, referring to Figure 10, the outlet-side structure is presented. On the outlet-side end face 10Eₒᵤₜ, the cross-section area of the outlet-side flow passage 70Hₒᵤₜ is made larger than that in the central part in the axial direction. On the other hand, the cross-section area of the inlet-side flow passage 70Hᵢₙ is made 0. Specifically, the hexagon which is the cross-section shape of the outlet-side flow passage 70Hₒᵤₜ in the axial-directional center part is enlarged as it is, the vertices of each hexagon reach the centers of the inlet-side flow passages 70Hᵢₙ, and in this way, the inlet-side flow passage 70Hᵢₙ is closed.

For such a honeycomb filter, after molding a honeycomb compact having the protrusion parts WP in the shapes of Figure 8, the closing only has to be performed similarly to the first embodiment.

Also in the embodiment, the protrusion parts WP can suppress cracks from occurring.

### (Third Embodiment)

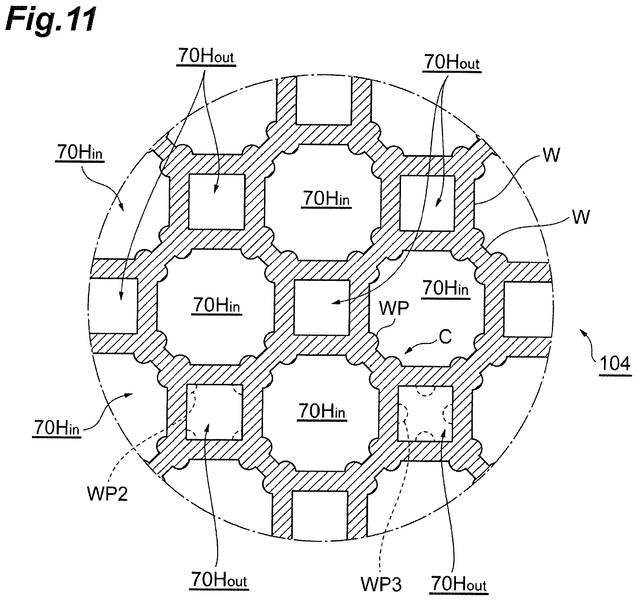

Next, referring to Figure 11, a honeycomb filter 104 according to a third embodiment is described. Description of the points same as those in the first embodiment is omitted. Figure 11 shows a cross-section in the axial-directional center part of the honeycomb filter 104 according to the embodiment. Different from the honeycomb filter 100 according to the first embodiment, in this embodiment, the inlet-side flow passages 70Hᵢₙ and the outlet-side flow passages 70Hₒᵤₜ are regularly arranged in such a way that one inlet-side flow passage 70Hᵢₙ is adjacent to four other inlet-side flow passages 70Hᵢₙ and is adjacent to four outlet-side flow passages 70Hₒᵤₜ. One outlet-side flow passage 70Hₒᵤₜ is adjacent to four inlet-side flow passages 70Hᵢₙ and is not adjacent to the other outlet-side flow passages 70Hₒᵤₜ.

The outlet-side flow passage 70Hₒᵤₜ is formed of four partition walls W, and its cross-section shape is substantially tetragonal. The inlet-side flow passage 70Hᵢₙ is formed of eight partition walls W. In the inlet-side flow passage 70Hᵢₙ, in each corner part C made between a pair of partition walls W, the protrusion part WP protruding toward the interior of the inlet-side flow passage 70Hᵢₙ is formed. Accordingly, the cross-section shape of the inlet-side flow passage 70Hᵢₙ has a shape in which the vertices of the octagon are caused to protrude toward the inside.

Illustration omitted, on the inlet-side end face, the cross-section area of the outlet-side flow passage 70Hₒᵤₜ is enlarged into a tetragon whose vertices are present in respective four inlet-side flow passages 70Hᵢₙ such that the inlet-side flow passage 70Hᵢₙ is closed. Moreover, on the outlet-side end face, the cross-section area of the inlet-side flow passage 70Hᵢₙ is enlarged into a tetragon whose vertices are present in respective four outlet-side flow passages 70Hₒᵤₜ such that the outlet-side flow passage 70Hₒᵤₜ is closed.

Also in the embodiment, the protrusion parts WP can suppress cracks from occurring.

### (Fourth Embodiment)

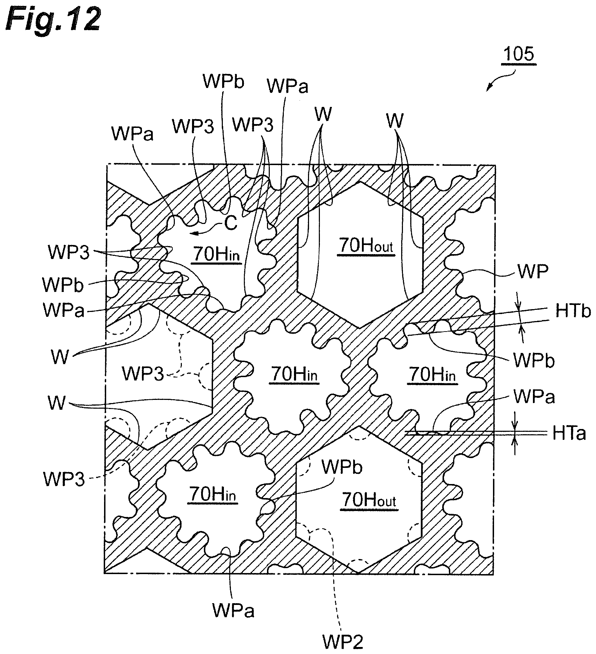

Next, referring to Figure 12, a honeycomb filter 105 according to a fourth embodiment is described. Description of the points same as those in the first embodiment is omitted. Figure 12 shows an expanded cross-section in the axial-directional center part of the honeycomb filter 105 according to the embodiment. Different from the honeycomb filter 100 according to the first embodiment, in this embodiment, the partition wall W is not flat plate-shaped but the cross-section shape of the face on the inlet-side flow passage 70Hᵢₙ side is a waved plate. A protrusion part WPa or a protrusion part WPb is provided in the corner part C made between an adjacent pair of partition walls W. Each of a protrusion height HTa from the line connecting both ends of the bottom part of the protrusion part WPa and a protrusion height HTb from the line connecting both ends of the bottom part of the protrusion part WPb can be 0.04 to 0.20 mm and they can be different from each other. Each of these protrusion part WPa and protrusion part WPb protrudes toward the interior of the inlet-side flow passage 70Hᵢₙ and extends in the axial direction. Moreover, the partition wall W has a protrusion part WP3 (third protrusion part) that protrudes toward the interior of the inlet-side flow passage 70Hᵢₙ and extends in the axial direction in a central part of the partition wall W.

Also in the embodiment, cracks can be suppressed from occurring by the protrusion part WPa and the protrusion part WPb.

Notably, the present invention is not limited to the aforementioned embodiments but various modification modes are possible.

For example, the arrangement of the protrusion parts WP can be properly changed. It is preferable that the protrusion part WP be provided in the corner part formed between the partition wall separating the outlet-side flow passage 70Hₒᵤₜ and the inlet-side flow passage 70Hᵢₙ and another partition wall (for example, which may be any of the partition wall separating the outlet-side flow passage 70Hₒᵤₜ and the inlet-side flow passage 70Hᵢₙ, the partition wall separating the outlet-side flow passages 70Hₒᵤₜ, and the partition wall separating the inlet-side flow passages 70Hᵢₙ). This is because the partition wall separating the outlet-side flow passage 70Hₒᵤₜ and the inlet-side flow passage 70Hᵢₙ is deformed in closing, and therefore, stress tends to be exerted on that corner part.

Moreover, while in the aforementioned embodiments, the protrusion parts WP are provided only in the inlet-side flow passages 70Hᵢₙ, for example, as presented by broken lines in Figure 3 and Figure 11, a protrusion part (second protrusion part) WP2 that protrudes toward the interior of the outlet-side flow passage 70Hₒᵤₜ and extends in the axial direction may be provided in the corner part between the partition walls in the outlet-side flow passage 70Hₒᵤₜ. In this case, when the inlet-side flow passages 70Hᵢₙ are closed by deforming the outlet-side flow passages 70Hₒᵤₜ, cracks can be suppressed.

Moreover, as shown in Figure 3, Figure 8, Figure 11 and Figure 12, in the central part of at least one of the inlet-side flow passages (first flow passages) in the axial direction, at least one of the partition walls W can also have the protrusion part WP3 (third protrusion part) that protrudes toward the interior of the inlet-side flow passage or the outlet-side flow passage (second flow passage) and extends in the axial direction in a central part of the partition wall W. In this case, cracks when the central part of the partition wall is deformed can be suppressed.

Moreover, the arrangement of the inlet-side flow passages and the outlet-side flow passages, that is, the number of flow passages adjacent to each flow passage is also not limited to those in the aforementioned embodiment. Notably, in the present specification, "two flow passages being adjacent to each other" can mean that two flow passages are separated via one partition wall in the thickness direction of the partition wall. Two flow passages that are positioned in diagonal relation in a so-called square flow passage arrangement are not flow passages being adjacent to each other.

Moreover, the cross-section shape of the flow passage is also not specially limited to those in the aforementioned embodiments but it only has to be a shape with corner parts. Moreover, the cross-section shape of the protrusion part is also not limited to a shape having a part of a circle, that is, an arc, but it may be a shape having a part of a polygon such as a triangle and a tetragon or may also be a shape having a part of an ellipsoid.

Furthermore, the shape of appearance of the filter may not be a cylindrical body but, for example, may also be tetragonal prismatic. The density of cells can be made, for example, 200 to 400 cpsi.

### Reference Signs List

- 70Hᵢₙ: Inlet-side flow passage (first flow passage)
- 70Hₒᵤₜ: Outlet-side flow passage (second flow passage)
- WP: Protrusion part (first protrusion part, second protrusion part)
- 10: Cylindrical body (columnar body)
- W: Partition wall
- C: Corner part
- CP: Central part
- 100: Honeycomb filter

## Claims

1. A honeycomb filter (100) comprising a columnar body (10) including a plurality of first flow passages (70Hᵢₙ) and a plurality of second flow passages (70Hₒᵤₜ) extending in an axial direction and including partition walls (W) separating the adjacent flow passages, wherein
a cross-section area of each first flow passage (70Hᵢₙ) on one end face (10Eᵢₙ) of the columnar body (10) is larger than a cross-section area of each first flow passage (70Hᵢₙ) in a central part (CP) in the axial direction, and each second flow passage (70Hₒᵤₜ) is closed on the one end face (10Eᵢₙ) by crimping the partition walls (W) together,
each corner part (C) that forms the first flow passages (70Hᵢₙ) and is formed between an adjacent pair of the partition walls (W) has a first protrusion part (WP) that protrudes toward an interior of the first flow passage (70Hᵢₙ) and extends in the axial direction, in a central part (CP) of the first flow passages (70Hᵢₙ) in the axial direction; and
a cross-section area of each second flow passage (70Hₒᵤₜ) on the other end face (10Eₒᵤₜ) of the columnar body (10) is larger than a cross-section area of each second flow passage (70Hₒᵤₜ) in the central part (CP) in the axial direction, and each first flow passage (70Hᵢₙ) is closed on the other end face (10Eₒᵤₜ).

2. The honeycomb filter according to claim 1, wherein one of the pair of partition walls (W) forming the corner part (C) separates the first flow passage (70Hᵢₙ) and the second flow passage (70Hₒᵤₜ) from each other.

3. The honeycomb filter according to claim 1 or 2, wherein
a corner part (C) that forms the second flow passage (70Hₒᵤₜ) and is formed between an adjacent pair of the partition walls (W) has a second protrusion part (WP2) that protrudes toward an interior of the second flow passage (70Hₒᵤₜ) and extends in the axial direction, in a central part (CP) of at least one of the second flow passages (70Hₒᵤₜ) in the axial direction.

4. The honeycomb filter according to any one of claims 1 to 3, wherein
in an axial-directional central part (CP) of the columnar body (10), the first flow passage (70Hᵢₙ) is adjacent to three of the second flow passages (70Hₒᵤₜ) and three of the first flow passages (70Hin), and
the second flow passage (70Hₒᵤₜ) is adjacent to six of the first flow passages (70Hin).

5. The honeycomb filter according to any one of claims 1 to 3, wherein
in an axial-directional central part (CP) of the columnar body (10), the first flow passage (70Hᵢₙ) is adjacent to two of the second flow passages (70Hₒᵤₜ) and four of the first flow passages (70Hᵢₙ), and
the second flow passage (70Hₒᵤₜ) is adjacent to six of the first flow passages (70Hin).

6. The honeycomb filter according to any one of claims 1 to 3, wherein
in an axial-directional central part (CP) of the columnar body (10), the first flow passage (70Hᵢₙ) is adjacent to four of the second flow passages (70Hₒᵤₜ) and four of the first flow passages (70Hᵢₙ), and
the second flow passage (70Hₒᵤₜ) is adjacent to four of the first flow passages (70Hin).

7. The honeycomb filter according to any one of claims 1 to 5, wherein in the central part (CP) of at least one of the first flow passages (70Hᵢₙ) in the axial direction, at least one of the partition walls (W) has a third protrusion part (WP3) that protrudes toward the interior of the first flow passage (70Hin) or the second flow passage (70Hₒᵤₜ) and extends in the axial direction in a central part (CP) of the partition wall (W).

8. A method for manufacturing a honeycomb filter (100) according to any one of claims 1 to 7, comprising:
a step of preparing a honeycomb compact (100') including a columnar body (10) having a plurality of first flow passages (70Hᵢₙ) and a plurality of second flow passages (70Hₒᵤₜ) extending in an axial direction and having partition walls (W) separating the adjacent flow passages, each corner part (C) that forms the first flow passages (70Hᵢₙ) and is formed between an adjacent pair of the partition walls (W) having a first protrusion part (WP) that protrudes toward an interior of the first flow passage (70Hᵢₙ), in a central part (CP) of the first flow passages (70Hᵢₙ) in the axial direction;
a step of inserting a jig (400) into each first flow passage (70Hᵢₙ) of the honeycomb compact (100') to enlarge a cross-section area and crimping the partition walls (W) together on each second flow passage side to close each second flow passage (70Hₒᵤₜ); and
a step of inserting a jig (400) into each second flow passage (70Hₒᵤₜ) of the honeycomb compact (100') to enlarge a cross-section area and crimping the partition walls (W) together on each first flow passage side to close each first flow passage (70Hᵢₙ).

## Patentansprüche

1. Wabenfilter (100) mit einem säulenförmigen Körper (10), der mehrere erste Strömungsdurchgänge (70Hᵢₙ) und mehrere zweite Strömungsdurchgänge (70Hₒᵤₜ) aufweist, die sich in axialer Richtung erstrecken und Trennwände (W) aufweisen, die die benachbarten Strömungsdurchgänge voneinander trennen, wobei
eine Querschnittsfläche jedes ersten Strömungsdurchgangs (70Hᵢₙ) an einer Endfläche (10Eᵢₙ) des säulenförmigen Körpers (10) größer ist als eine Querschnittsfläche jedes ersten Strömungsdurchgangs (70Hᵢₙ) in einem mittleren Teil (CP) in axialer Richtung und jeder zweite Strömungsdurchgang (70Hₒᵤₜ) an der einen Endfläche (10Eᵢₙ) durch Aneinandercrimpen der Trennwände (W) geschlossen ist,
jeder Eckteil (C), der die ersten Strömungsdurchgänge (70Hᵢₙ) bildet und zwischen einem benachbarten Paar der Trennwände (W) ausgebildet ist, einen ersten vorstehenden Teil (WP) hat, der in Richtung Innenseite des ersten Strömungsdurchgangs (70Hᵢₙ) vorsteht und sich in axialer Richtung erstreckt, und zwar in einem mittleren Teil (CP) der ersten Strömungsdurchgänge (70Hᵢₙ) in axialer Richtung; und
eine Querschnittsfläche jedes zweiten Strömungsdurchgangs (70Hₒᵤₜ) an der anderen Endfläche (10Eₒᵤₜ) des säulenförmigen Körpers (10) größer ist als eine Querschnittsfläche jedes zweiten Strömungsdurchgangs (70Hₒᵤₜ) in dem mittleren Teil (CP) in axialer Richtung und jeder erste Strömungsdurchgang (70Hᵢₙ) an der anderen Endfläche (10Eₒᵤₜ) geschlossen ist.

2. Wabenfilter nach Anspruch 1, wobei eine aus dem Paar von Trennwänden (W), die den Eckteil (C) bilden, den ersten Strömungsdurchgang (70Hᵢₙ) und den zweiten Strömungsdurchgang (70Hₒᵤₜ) voneinander trennt.

3. Wabenfilter nach Anspruch 1 oder 2, wobei
ein Eckteil (C), der den zweiten Strömungsdurchgang (70Hₒᵤₜ) bildet und zwischen einem benachbarten Paar der Trennwände (W) ausgebildet ist, einen zweiten vorstehenden Teil (WP2) hat, der in Richtung Innenseite des zweiten Strömungsdurchgangs (70Hₒᵤₜ) vorsteht und sich in axialer Richtung erstreckt, und zwar in einem mittleren Teil (CP) von wenigstens einem der zweiten Strömungsdurchgänge (70Hₒᵤₜ) in axialer Richtung.

4. Wabenfilter nach einem der Ansprüche 1 bis 3, wobei
in einem axial gerichteten mittleren Teil (CP) des säulenförmigen Körpers (10) der erste Strömungsdurchgang (70Hin) zu drei der zweiten Strömungsdurchgänge (70Hₒᵤₜ) und zu drei der ersten Strömungsdurchgänge (70Hᵢₙ) benachbart ist und
der zweite Strömungsdurchgang (70Hₒᵤₜ) zu sechs der ersten Strömungsdurchgänge (70Hᵢₙ) benachbart ist.

5. Wabenfilter nach einem der Ansprüche 1 bis 3, wobei
in einem axial gerichteten mittleren Teil (CP) des säulenförmigen Körpers (10) der erste Strömungsdurchgang (70Hᵢₙ) zu zwei der zweiten Strömungsdurchgänge (70Hₒᵤₜ) und vier der ersten Strömungsdurchgänge (70Hᵢₙ) benachbart ist und
der zweite Strömungsdurchgang (70Hₒᵤₜ) zu sechs der ersten Strömungsdurchgänge (70Hᵢₙ) benachbart ist.

6. Wabenfilter nach einem der Ansprüche 1 bis 3, wobei
in einem axial gerichteten mittleren Teil (CP) des säulenförmigen Körpers (10) der erste Strömungsdurchgang (70Hᵢₙ) zu vier der zweiten Strömungsdurchgänge (70Hₒᵤₜ) und vier der ersten Strömungsdurchgänge (70Hᵢₙ) benachbart ist und
der zweite Strömungsdurchgang (70Hₒᵤₜ) zu vier der ersten Strömungsdurchgänge (70Hᵢₙ) benachbart ist.

7. Wabenfilter nach einem der Ansprüche 1 bis 5, wobei im mittleren Teil (CP) von wenigstens einem der ersten Strömungsdurchgänge (70Hᵢₙ) in axialer Richtung wenigstens eine der Trennwände (W) einen dritten vorstehenden Teil (WP3) hat, der in Richtung Innenseite des ersten Strömungsdurchgangs (70Hᵢₙ) oder des zweiten Strömungsdurchgangs (70Hₒᵤₜ) vorsteht und sich in axialer Richtung in einem mittleren Teil (CP) der Trennwand (W) erstreckt.

8. Verfahren zur Herstellung eines Wabenfilters (100) nach einem der Ansprüche 1 bis 7, wobei das Verfahren aufweist:
einen Schritt des Herstellens eines Wabenpresslings (100') mit einem säulenförmigen Körper (10), der mehrere erste Strömungsdurchgänge (70Hᵢₙ) und mehrere zweite Strömungsdurchgänge (70Hₒᵤₜ) hat, die sich in axialer Richtung erstrecken und Trennwände (W) haben, die die benachbarten Strömungsdurchgänge voneinander trennen, wobei jeder Eckteil (C), der die ersten Strömungsdurchgänge (70Hᵢₙ) bildet und zwischen einem benachbarten Paar der Trennwände (W) ausgebildet ist, einen ersten vorstehenden Teil (WP) hat, der in Richtung Innenseite des ersten Strömungsdurchgangs (70Hᵢₙ) vorsteht, und zwar in einem mittleren Teil (CP) der ersten Strömungsdurchgänge (70Hᵢₙ) in axialer Richtung;
einen Schritt des Einsetzens einer Vorrichtung (400) in jeden ersten Strömungsdurchgang (70Hᵢₙ) des Wabenpresslings (100'), um eine Querschnittsfläche zu vergrößern, und des Zusammenquetschens der Trennwände (W) auf jeder zweiten Strömungsdurchgangsseite, um jeden zweiten Strömungsdurchgang (70Hₒᵤₜ) zu schließen; und
einen Schritt des Einsetzens einer Vorrichtung (400) in jeden zweiten Strömungsdurchgang (70Hₒᵤₜ) des Wabenpresslings (100'), um eine Querschnittsfläche zu vergrößern, und des Zusammendrückens der Trennwände (W) auf jeder ersten Strömungsdurchgangsseite, um jeden ersten Strömungsdurchgang (70Hᵢₙ) zu schließen.

## Revendications

1. Filtre en nid d'abeilles (100) comprenant un corps colonnaire (10) comportant une pluralité de premiers passages d'écoulement (70Hᵢₙ) et une pluralité de seconds passages d'écoulement (70Hₒᵤₜ) s'étendant dans une direction axiale et comprenant des parois de séparation (W) séparant les passages d'écoulement adjacents, dans lequel
une aire en section transversale de chaque premier passage d'écoulement (70Hᵢₙ), sur une face d'extrémité (10Eᵢₙ) du corps colonnaire (10), est plus grande qu'une aire en section transversale de chaque premier passage d'écoulement (70Hᵢₙ) dans une partie centrale (CP) dans la direction axiale, et chaque second passage d'écoulement (70Hₒᵤₜ) est fermé sur ladite face d'extrémité (10Eᵢₙ) par sertissage des parois de séparation (W) ensemble ;
chaque partie coin (C), formant les premiers passages d'écoulement (70Hᵢₙ) et formée entre une paire adjacente des parois de séparation (W), comporte une première partie saillante (WP) faisant saillie vers un intérieur du premier passage d'écoulement (70Hᵢₙ) et s'étendant dans la direction axiale, dans une partie centrale (CP) des premiers passages d'écoulement (70Hᵢₙ) dans la direction axiale ; et
une aire en section transversale de chaque second passage d'écoulement (70Hₒᵤₜ), sur l'autre face d'extrémité (10Eₒᵤₜ) du corps colonnaire (10), est plus grande qu'une aire en section transversale de chaque second passage d'écoulement (70Hₒᵤₜ) dans la partie centrale (CP) dans la direction axiale, et chaque premier passage d'écoulement (70Hᵢₙ) est fermé sur l'autre face d'extrémité (10Eₒᵤₜ).

2. Le filtre en nid d'abeilles selon la revendication 1, dans lequel une paroi, parmi la paire de parois de séparation (W) formant la partie coin (C), sépare le premier passage d'écoulement (70Hᵢₙ) et le second passage d'écoulement (70Hₒᵤₜ) l'un de l'autre.

3. Le filtre en nid d'abeilles selon les revendications 1 ou 2, dans lequel
une partie coin (C), formant le second passage d'écoulement (70Hₒᵤₜ) et formée entre une paire adjacente des parois de séparation (W), comporte une deuxième partie saillante (WP2) faisant saillie vers un intérieur du second passage d'écoulement (70Hₒᵤₜ) et s'étendant dans la direction axiale, dans une partie centrale (CP) d'au moins l'un des seconds passages d'écoulement (70Hₒᵤₜ) dans la direction axiale.

4. Le filtre en nid d'abeilles selon l'une quelconque des revendications 1 à 3, dans lequel
dans une partie centrale dans la direction axiale (CP) du corps colonnaire (10), le premier passage d'écoulement (70Hᵢₙ) est adjacent à trois passages parmi les seconds passages d'écoulement (70Hₒᵤₜ) et à trois passages parmi les premiers passages d'écoulement (70Hᵢₙ), et
le second passage d'écoulement (70Hₒᵤₜ) est adjacent à six passages parmi les premiers passages d'écoulement (70Hᵢₙ).

5. Le filtre en nid d'abeilles selon l'une quelconque des revendications 1 à 3, dans lequel
dans une partie centrale dans la direction axiale (CP) du corps colonnaire (10), le premier passage d'écoulement (70Hᵢₙ) est adjacent à deux passages parmi les seconds passages d'écoulement (70Hₒᵤₜ) et à quatre passages parmi les premiers passages d'écoulement (70Hᵢₙ), et
le second passage d'écoulement (70Hₒᵤₜ) est adjacent à six passages parmi les premiers passages d'écoulement (70Hᵢₙ).

6. Le filtre en nid d'abeilles selon l'une quelconque des revendications 1 à 3, dans lequel
dans une partie centrale dans la direction axiale (CP) du corps colonnaire (10), le premier passage d'écoulement (70Hᵢₙ) est adjacent à quatre passages parmi les seconds passages d'écoulement (70Hₒᵤₜ) et à quatre passages parmi les premiers passages d'écoulement (70Hᵢₙ), et
le second passage d'écoulement (70Hₒᵤₜ) est adjacent à quatre passages parmi les premiers passages d'écoulement (70Hᵢₙ).

7. Le filtre en nid d'abeilles selon l'une quelconque des revendications 1 à 5, dans lequel, dans la partie centrale (CP) d'au moins l'un des premiers passages d'écoulement (70Hᵢₙ) dans la direction axiale, au moins l'une des parois de séparation (W) comporte une troisième partie saillante (WP3) faisant saillie vers l'intérieur du premier passage d'écoulement (70Hᵢₙ) ou du second passage d'écoulement (70Hₒᵤₜ), et s'étendant dans la direction axiale dans une partie centrale (CP) de la paroi de séparation (W).

8. Procédé de fabrication d'un filtre en nid d'abeilles (100) selon l'une quelconque des revendications 1 à 7, le procédé comprenant :
une étape de préparation d'un comprimé en nid d'abeilles (100') comportant un corps colonnaire (10) comprenant une pluralité de premiers passages d'écoulement (70Hᵢₙ) et une pluralité de seconds passages d'écoulement (70Hₒᵤₜ) s'étendant dans une direction axiale et comportant des parois de séparation (W) séparant les passages d'écoulement adjacents, chaque partie coin (C), formant les premiers passages d'écoulement (70Hᵢₙ) et formée entre une paire adjacente des parois de séparation (W), comportant une première partie saillante (WP) faisant saillie vers un intérieur du premier passage d'écoulement (70Hᵢₙ), dans une partie centrale (CP) des premiers passages d'écoulement (70Hᵢₙ) dans la direction axiale ;
une étape d'insertion d'un gabarit (400) dans chaque premier passage d'écoulement (70Hᵢₙ) du comprimé en nid d'abeilles (100') afin d'élargir une aire en section transversale, et de sertissage des parois de séparation (W) ensemble sur chaque côté second passage d'écoulement afin de fermer chaque second passage d'écoulement (70Hₒᵤₜ) ; et
une étape d'insertion d'un gabarit (400) dans chaque second passage d'écoulement (70Hₒᵤₜ) du comprimé en nid d'abeilles (100') afin d'élargir une aire en section transversale, et de sertissage des parois de séparation (W) ensemble sur chaque côté premier passage d'écoulement afin de fermer chaque premier passage d'écoulement (70Hᵢₙ).
